# DEMANDE DE BREVET EUROPEEN

(11) **EP 3 960 884 A1**
(43) Date de publication de la demande: **02.03.2022**
(21) Numéro de dépôt: 21202501.9
(22) Date de dépôt: 22.12.2014
(51) Int. Cl.: C21D 8/06, C21D 9/52, C21D 1/18, C21D 1/26, C21D 1/30, C22C 38/00, C22C 38/04, C22C 38/18, C22C 38/22, C22C 38/40, C22C 38/44, C21D 1/20, C21D 1/42, C21D 1/607, C21D 9/00, C22C 38/02, C22C 38/06

(54) **FIL LAMINÉ À FROID EN ACIER À HAUTE RÉSISTANCE À LA FATIGUE ET À LA FRAGILISATION PAR L'HYDROGÈNE ET RENFORT DE CONDUITES FLEXIBLES L'INCORPORANT**

(30) Priorité: 24.12.2013 WO PCT/FR2013/000370
(62) Demande divisionnaire de: 14833149.9
(71) Demandeur: Arcelormittal Wire France, 01000 Bourg en Bresse (FR)
(72) Inventeur: FOISSEY, Sylvain, 01800 MEXIMIEUX (FR); BASCOURT, Gaëlle, 01440 VIRIAT (FR)
(74) Mandataire: Lavoix

(57) **Abrégé**

L'invention concerne un fil laminé à froid en acier présentant la composition chimique suivante, exprimée en pourcentages en poids,
0,2 ≤ C % ≤ 0,6
0,5 ≤ Mn % ≤ 1,0
0,1 ≤ Si ≤ 0,5 %
0,2 ≤ Cr ≤ 1,0%
P ≤ 0,020%
S ≤ 0,015%
N ≤ 0,010%
et éventuellement pas plus de 0,07% d'Al, pas plus de 0,2% de Ni, pas plus de 0,1% de Mo, et pas plus de 0,1% de Cu, le reste étant du fer et les inévitables impuretés venant de l'élaboration, le fil présentant une microstructure comprenant de la bainite et, éventuellement, jusqu'à 35% de ferrite aciculaire et jusqu'à 15% de perlite. L'invention concerne aussi son procédé de fabrication et les conduites flexibles pour l'exploitation des hydrocarbures qui l'incorporent.

## Description

La présente invention concerne le domaine de la métallurgie destinée à l'exploitation pétrolière maritime. Elle a trait plus particulièrement aux fils d'acier utilisables en tant qu'éléments de renfort ou de structure de composants ou d'ouvrages immergés en eau profondes, comme les conduites off shore flexibles, qu'elles soient utilisées pour transporter des hydrocarbures liquides ou gazeux.

On sait qu'une exigence première concernant les fils de ce type est, outre des caractéristiques mécaniques élevées, une bonne résistance à la fragilisation par l'hydrogène en milieu acide sulfuré, en particulier sous forme de H₂S présent dans les fluides et hydrocarbures transportés.

Aujourd'hui, l'offre commerciale dans le domaine des fils d'acier pour utilisation en off-shore se situe principalement dans des nuances faiblement alliées présentant une résistance à la rupture Rm de 800 MPa environ.

Pour fabriquer ces fils laminés à froid, on utilise, de manière connue, des aciers au manganèse comprenant de 0,15 à 0,80 % en poids de carbone dont la microstructure initiale est perlito-ferritique. Après mise en forme du fil machine laminé rond initial, on lui applique un traitement thermique de détente approprié pour obtenir la dureté requise. Cependant, les fils laminé à froid obtenus par ces procédés classiques ne résistent pas aux conditions d'acidité relativement sévères rencontrées en eaux profondes, dues à une forte présence d'H₂S dans l'hydrocarbure transporté.

En outre, les conduites off shore flexibles doivent à présent servir à des profondeurs d'immersion encore plus grandes, ce qui nécessite d'accroître la résistance mécanique à la rupture au-delà de 800 MPa ainsi que la résistance à la corrosion en fatigue générée par la présence d'H₂S et de CO2.

En outre, la contrainte du marché est de plus en plus forte sur les prix, ce qui obère corrélativement l'appel habituel aux éléments d'alliage nobles, comme le chrome, le niobium, etc.... ou à des étapes de traitement longues ou multiples et donc couteuses, surtout si elles doivent être conduites à chaud.

Le but de l'invention est donc de mettre à disposition un fil d'acier présentant de très bonnes propriétés de résistance à la fragilisation par hydrogène en environnement acide (de type H₂S) et de très bonnes propriétés de résistance à la corrosion en fatigue (CO2 + H₂S) pour satisfaire les nouvelles contraintes des marchés du pétrole et du gaz, en employant notamment une composition d'acier faiblement alliée.

Plus particulièrement, on recherche une absence de fissurations internes après des tests sous contraintes pendant 30 jours à un pH de 4,1 dans un environnement contenant 5 mbar d'H₂S, voire plus (résistance à la fragilisation par hydrogène).

On recherche également une absence de rupture en fatigue après 2 millions de cycles de flexion sous une contrainte alternée de +100 MPa à +600 MPa dans un environnement corrosif contenant du CO2 et de l'H₂S. De façon plus particulièrement préférée, on recherche une absence de rupture en fatigue pouvant aller jusqu'à 4 millions de cycles (résistance à la corrosion en fatigue).

Outre ces propriétés d'usages des fils, on recherche également de bonnes propriétés mécaniques et, notamment, une résistance mécanique à la rupture Rm allant de 800 à 1300 MPa et une ductilité A supérieure ou égale à 10% pour faciliter les opérations de mise en forme.

A cet effet, l'invention a pour objet un fil selon la revendication 1. Le fil peut également comprendre les caractéristiques des revendications 2 à 5, prises isolément ou en combinaison.

L'invention a également pour objet un procédé selon la revendication 6. Le procédé peut également comprendre les caractéristiques des revendications 7 à 11, prises isolément ou en combinaison.

L'invention a également pour objet une conduite selon la revendication 12.

Selon l'invention, la nuance d'acier utilisée pour les fils selon l'invention comprend, les pourcentages étant exprimés en poids :
0,2 ≤ C % ≤ 0,6
0,5 ≤ Mn % ≤ 1,0
0,1 ≤ Si ≤ 0,5 %
0,2 ≤ Cr ≤ 1,0 %
P ≤ 0,020%
S ≤ 0,015 %
N ≤ 0,010 %
et éventuellement pas plus de 0,07 % d'Al, pas plus de 0,2 % de Ni, pas plus de 0,1 % de Mo, et pas plus de 0,1 % de Cu.

La teneur en carbone est comprise entre 0,2 et 0,6% en poids. La valeur basse permet de garantir l'obtention d'une dureté suffisante en sortie de traitement thermique. La teneur maximale est limitée à 0,6% pour garder suffisamment de ductilité nécessaire à la mise en forme à froid lors de la fabrication du fil.

La teneur en manganèse est comprise entre 0,5 et 1,0% en poids. La valeur basse permet de garantir l'obtention de la microstructure majoritairement bainitique qui est recherchée. La teneur maximale est limitée à 1,0% pour éviter la formation de phases peu déformables comme la martensite.

La teneur en silicium est comprise entre 0,1 et 0,5% en poids. La valeur basse, en lien avec la valeur basse de chrome, permet de garantir l'obtention de la microstructure visée par l'invention dans toute la section du film de forme. La teneur maximale est limitée à 0,5% pour là aussi ne pas former de martensite lors du traitement thermique, car cette phase n'est ensuite pas déformable.

La teneur en chrome est comprise entre 0,2 et 1,0% en poids. La valeur basse, en lien avec la valeur basse de silicium, permet de garantir l'obtention de la microstructure visée par l'invention dans toute la section du film de forme. La teneur maximale est limitée à 1,0% pour ne pas former de martensite lors du traitement thermique.

La teneur en phosphore est limitée à 0,020% en poids afin de limiter les ségrégations néfastes à al résistance à la fragilisation par hydrogène et vis-à-vis de la tenue en fatigue.

La teneur en soufre est limitée à 0,015% en poids pour limiter la présence d'inclusions néfastes vis-à-vis de la tenue en fatigue et de la fragilisation par l'hydrogène.

La teneur en azote est limitée à 0,010% en poids pour limiter la présence de nitrures néfastes vis-à-vis de la tenue en fatigue.

La nuance peut également comprendre jusqu'à 0,07% d'AI, jusqu'à 0,2% de Ni, jusqu'à 0,1% de Mo, et jusqu'à 0,1% de Cu. On limite la présence de ces éléments car ils sont à l'origine de comportements dispersifs lors du traitement thermique.

Un autre élément essentiel des fils selon l'invention est que la microstructure de l'acier qui les constitue comprend de la bainite. Elle peut en outre comprendre de la ferrite aciculaire jusqu'à une proportion de 35% en surface. De la perlite généralement lamellaire peut également être présente jusqu'à 15% en surface, de préférence jusqu'à 10% en surface et de façon plus particulièrement préférée, est totalement absente de la microstructure, car sa présence n'est pas recherchée.

La microstructure visée peut donc être bainitique ou bainito-ferritique, la somme des phases de bainite et de ferrite aciculaire étant de préférence supérieure à 50% en surface, de préférence supérieure à 70% en surface et de façon plus particulièrement préférée supérieure à 90% en surface, voire égale à 100% en surface.

Outre la perlite dont la proportion est limitée, on cherche également à éviter la présence de martensite qui ne permettrait pas de fabriquer un fil selon l'invention.

Les fils laminé à froid selon l'invention (parfois appelés fil de forme) peuvent prendre toute section adaptée à leur utilisation finale. En particulier, ils peuvent présenter une section droite ronde, généralement obtenue par exemple par simple tréfilage à partir d'un fil machine de plus gros diamètre.

Ils peuvent aussi avoir une section rectangulaire ou en méplat ou profilée en U, en Z, en T, etc., qui nécessiteront généralement de combiner une opération de tréfilage et une opération de laminage. Ces dernières sections, de forme plus complexe permettent aux fils de s'emboîter en rives les uns dans les autres, ou d'être agrafés pour former des nappes d'armature articulées.

Ils sont plus particulièrement destinés à l'exploitation pétrolière "off shore" pour constituer du fil d'armage, de frette ou de voûte entrant dans la structure des pipe-lines et autres conduites flexibles. Les fils laminés à froid en acier évoluent dans les pipe-lines entre deux couches de polymères extrudés, dans une zone appelée "annulaire".

Les fils selon l'invention pourront être fabriqués par tout procédé adapté permettant d'obtenir les caractéristiques d'usage recherchées. On préférera cependant mettre en œuvre le procédé selon l'invention qui comprend les étapes consistant à :
- alimenter un fil machine d'acier laminé à chaud dont le diamètre est supérieur ou égal à 10 mm,
- soumettre ledit fil machine à un traitement thermique d'austénitisation à une température supérieure à 950°C, puis
- refroidir ledit fil machine par une trempe isotherme à une température comprise entre 350 et 600°C afin d'obtenir une structure comprenant au moins 50% de bainite et, éventuellement, jusqu'à 35% de ferrite aciculaire et jusqu'à 15% de perlite, puis finir le refroidissement jusqu'à température ambiante à une vitesse de refroidissement comprise entre 30°C/s et 100°C/s,
- soumettre ledit fil machine refroidi à une opération de transformation mécanique à froid menée avec un taux d'écrouissage global compris entre 40 et 90%, afin d'obtenir une résistance mécanique à la traction Rm d'au moins 800 MPa puis
- le soumettre à un éventuel traitement thermique de relaxation de contraintes.

Le procédé selon l'invention peut en outre comprendre les caractéristiques suivantes, prises isolément ou en combinaison :
- le traitement thermique d'austénitisation subit par le fil machine est réalisé en continu, de préférence dans un four à gaz ou dans un four à induction sur le fil préalablement dévidé,
- le traitement thermique d'austénitisation est réalisé pendant une durée de 2 à 10 minutes,
- le refroidissement du fil machine est effectué par trempe isotherme dans un bain en fusion, de préférence à base de plomb ou de sels (mélange de nitrates/nitrites de sodium ou de potassium) ou bien encore dans un lit fluidisé des mêmes éléments, le temps d'immersion étant de préférence compris entre 1 et 10 min, de préférence suivi d'un refroidissement à l'eau,
- l'opération de transformation mécanique à froid comporte une étape de tréfilage suivie d'une étape de laminage à froid, le tréfilage étant de préférence réalisé afin d'obtenir une réduction de section d'au moins 15, voire 20%, le laminage à froid étant de préférence réalisé afin d'obtenir une réduction d'épaisseur d'au moins 30%,
- l'opération de transformation mécanique à froid est menée de façon à obtenir une résistance mécanique à la traction Rm d'au moins 1000 MPa et est suivie d'un traitement thermique de relaxation de contraintes mené de sorte à ne pas réduire la résistance mécanique à la traction Rm en dessous de 800, voire 850 ou 900 MPa.

L'opération de relaxation de contraintes permet notamment d'améliorer la résistance à la fragilisation par l'hydrogène du fil.

Afin de mieux illustrer l'invention, des essais ont été réalisés à titre indicatif et non limitatif.

### Essais

Les tests réalisés pour évaluer les performances des fils selon l'invention ont été réalisés dans les conditions suivantes :
Fragilisation à l'hydrogène (test HIC & SSCC - normes NACE TM0177 et

### NACE TM0284)

Les fils d'acier sont plongés dans une solution aqueuse ayant un pH de 4,1 et soumise au barbotage d'un gaz contenant du CO2 et 5mbar de H₂S, sous une contrainte de 650 MPa. Le test dure 30 jours à l'issue desquels on examine les fils par ultra-sons pour vérifier la présence éventuelle de fissurations internes.

### Résistance à la fatigue en milieu corrosif

Les fils d'acier sont plongés dans une solution aqueuse ayant un pH de 5 et soumise au barbotage d'un gaz contenant du CO₂ et jusqu'à 5 mbar de H₂S sous une contrainte alternée en flexion de 100 MPa à 500 MPa. Le test s'arrête lorsque le fil casse et on note alors le nombre de millions de cycles atteints.

On élabore tout d'abord une série de nuances dont la composition chimique, en % en poids, est détaillée en tableau 1 :

**Tableau 1**

| | C | Mn | Si | Cr | P | S | N | Al | Ni | Mo | Cu |
|---|---|---|---|---|---|---|---|---|---|---|---|
| 1 | 0,360 | 0,680 | 0,210 | 0,250 | 0,010 | 0,011 | 0,007 | 0,045 | 0,050 | 0,010 | 0,050 |
| 2 | 0,340 | 0,700 | 0,180 | 0,350 | 0,011 | 0,008 | 0,006 | 0,043 | 0,060 | 0,015 | 0,060 |
| 3 | 0,320 | 0,725 | 0,180 | 0,406 | 0,011 | 0,010 | 0,003 | 0,020 | 0,020 | 0,015 | 0,009 |

Pour les nuances 1 à 3, on fabrique ensuite de façon classique des fils machines ronds laminés à chaud de 15 mm de diamètre que l'on enroule en bobine. Dans une seconde étape, on austénitise ensuite le fil préalablement dévidé à 1000°C dans un four à gaz pendant 6 minutes.

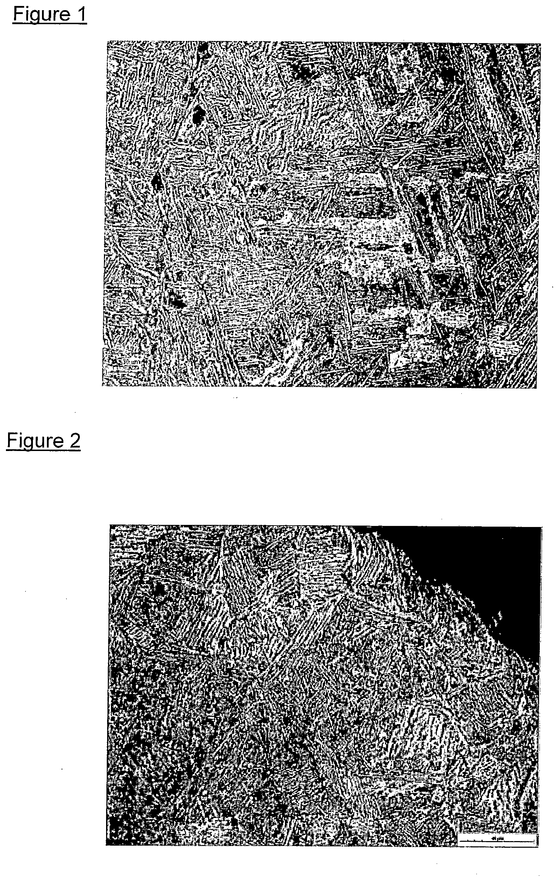

On réalise ensuite une trempe isotherme dans un bain de plomb fondu pendant 5 minutes à 500°C pour les nuances 1 et 2 et à 410°C pour la nuance 3, puis refroidi à l'eau de manière à conférer une structure ferrito/bainitique aux fils. La figure 1 présente une image micrographique montrant les différents constituants de la microstructure obtenue avec la nuance 1 (bainite, ferrite aciculaire et perlite lamellaire) et qui comporte moins de 35% de ferrite aciculaire et moins de 15% de perlite. La figure 2 présente une image micrographique montrant les différents constituants de la microstructure obtenue avec la nuance 3 comportant 70% de bainite et 30% de ferrite aciculaire et de perlite lamellaire.

Les fils sont ensuite tréfilés avec une réduction de section de 30% pour donner un fil rond de diamètre 12,54 mm puis laminés à froid avec une réduction d'épaisseur de 50% pour donner un fil plat dont la section est de 16 mm x 6,3 mm. Le taux d'écrouissage global qui correspond au pourcentage de réduction de section à l'issue des deux opérations à froid est ici de 57%. Les fils sont ensuite soumis à un traitement de relaxation de contraintes à une température de 600°C pendant 30 secondes.

On les soumet ensuite aux tests d'évaluation de leurs propriétés d'usage, dont les résultats sont rassemblés en tableau 2 :

**Tableau 2**

| Nuance | Rm (MPa) | A (%) | Nombre de fissures internes | Millions de cycles avant rupture |
|---|---|---|---|---|
| 1 | 900 | 13 | 0 (650 MPa) | 2 000 000 |
| 2 | 1000 | 11 | 0 (650 MPa) | 5 000 000 |
| 3 | 1200 | 11 | 0 (650 MPa) | 1 800 000 |

| | | | | |
|---|---|---|---|---|
| NR : non réalisé | | | | |

Il va de soi que l'invention ne saurait se limiter aux exemples décrits, mais qu'elle s'étend à de multiples variantes et équivalents.

## Revendications

1. Fil laminé à froid en acier, **caractérisé en ce qu'**il présente la composition chimique suivante, exprimée en pourcentages en poids,
0,2 ≤ C % ≤ 0,6
0,5 ≤ Mn % ≤ 1,0
0,1 ≤ Si ≤ 0,5 %
0,2 ≤ Cr ≤ 1,0%
P ≤ 0,020%
S ≤ 0,015%
N ≤ 0,010%
et éventuellement pas plus de 0,07% d'AI, pas plus de 0,2% de Ni, pas plus de 0,1% de Mo, et pas plus de 0,1% de Cu, le reste étant du fer et les inévitables impuretés venant de l'élaboration, ledit fil présentant une microstructure comprenant de la bainite et, éventuellement, jusqu'à 35% de ferrite aciculaire et jusqu'à 15% de perlite.

2. Fil laminé à froid selon la revendication 1, ne présentant aucune fissure interne après 30 jours de mise en contact avec un environnement contenant de l'H₂S, à un pH de 4,1.

3. Fil laminé à froid selon l'une ou l'autre des revendications 1 ou 2, ne présentant aucun cassure avant 2 millions de cycles de flexion sous une contrainte alternée de + 100 à + 500 MPa, dans un environnement contenant de l'H₂S et du CO2.

4. Fil laminé à froid selon l'une quelconque des revendications 1 à 3 dont la résistance mécanique à la rupture Rm est compris entre 900 et 1300 MPa.

5. Fil laminé à froid selon l'une quelconque des revendications 1 à 4 dont la ductilité A est supérieure ou égale à 10%.

6. Procédé de fabrication d'un fil laminé à froid selon l'une quelconque des revendications 1 à 5 comprenant les étapes consistant à :
- alimenter un fil machine d'acier laminé à chaud dont le diamètre est supérieur ou égal à 10 mm,
- soumettre ledit fil machine à un traitement thermique d'austénitisation à une température supérieure à 950°C, puis
- refroidir ledit fil machine par une trempe isotherme à une température comprise entre 350 et 600°C afin d'obtenir une structure comprenant au moins 50% de bainite et, éventuellement, jusqu'à 35% de ferrite aciculaire et jusqu'à 15% de perlite, puis finir le refroidissement jusqu'à température ambiante à une vitesse de refroidissement comprise entre 30°C/s et 100°C/s,
- soumettre ledit fil machine refroidi à une opération de transformation mécanique à froid menée avec un taux d'écrouissage global compris entre 40 et 90%, afin d'obtenir une résistance mécanique à la traction Rm d'au moins 800 MPa puis
- le soumettre à un éventuel traitement thermique de relaxation de contraintes.

7. Procédé de fabrication selon la revendication 6, dans lequel ledit traitement thermique d'austénitisation subit par le fil machine est réalisé en continu, dans un four à gaz ou dans un four à induction sur le fil préalablement dévidé.

8. Procédé de fabrication selon l'un ou l'autre des revendications 6 ou 7, dans lequel ledit traitement thermique d'austénitisation est réalisé pendant une durée de 2 à 10 minutes.

9. Procédé de fabrication selon l'une quelconque des revendications 6 à 8, dans lequel ledit refroidissement du fil machine est effectué par trempe isotherme dans un bain en fusion à base de plomb ou de sels, le temps d'immersion étant compris entre 1 et 10 min, suivi d'un refroidissement à l'eau.

10. Procédé de fabrication selon l'une quelconque des revendications 6 à 9, dans lequel ladite opération de transformation mécanique à froid comporte une étape de tréfilage suivie d'une étape de laminage à froid, le tréfilage étant réalisé afin d'obtenir une réduction de section d'au moins 15%, le laminage à froid étant réalisé afin d'obtenir une réduction d'épaisseur d'au moins 30%.

11. Procédé de fabrication selon l'une quelconque des revendications 6 à 10, dans lequel ladite opération de transformation mécanique à froid est menée de façon à obtenir une résistance mécanique à la traction Rm d'au moins 1000 MPa et est suivie d'un traitement thermique de relaxation de contraintes mené de sorte à ne pas réduire la résistance mécanique à la traction Rm en dessous de 800 MPa.

12. Conduite flexible pour le secteur de l'exploitation d'hydrocarbures comprenant au moins un fil laminé à froid selon l'une quelconque des revendications 1 à 5 ou obtenu par le procédé selon l'une quelconque des revendications 6 à 11.
